# EUROPEAN PATENT SPECIFICATION

(11) **EP 4 281 953 B1**
(45) Date of publication and mention of the grant of the patent: **02.07.2025**
(21) Application number: 22708346.6
(22) Date of filing: 25.01.2022
(51) Int. Cl.: G08B 21/04, G08B 29/24, G06V 10/70, G08B 13/196, G08B 29/18, G06N 20/00

(54) **ENABLING TRAINING OF AN ML MODEL FOR MONITORING A PERSON**
ERMÖGLICHUNG DES TRAINIERENS EINES ML-MODELLS ZUR ÜBERWACHUNG EINER PERSON
ACTIVATION DE L'ENTRAÎNEMENT D'UN MODÈLE ML POUR LA SURVEILLANCE D'UNE PERSONNE

(30) Priority: 26.01.2021 SE 2150084
(43) Date of publication of application: 29.11.2023
(73) Proprietor: ASSA ABLOY AB, 107 23 Stockholm (SE)
(72) Inventor: PERNYER, Kenneth, 737 90 Ängelsberg (SE); CRASTO, Nieves, TX 78753 (US)
(74) Representative: Kransell & Wennborg KB
(86) International application number: PCT/EP2022/051645
(87) International publication number: WO 2022/161954

(56) References cited:
- US-A1- 2017 289 504
- US-A1- 2019 042 851
- US-A1- 2020 205 697
- SENAVIRATHNE NAVODA ET AL: "On the Role of Data Anonymization in Machine Learning Privacy", 2020 IEEE 19TH INTERNATIONAL CONFERENCE ON TRUST, SECURITY AND PRIVACY IN COMPUTING AND COMMUNICATIONS (TRUSTCOM), IEEE, 29 December 2020 (2020-12-29), pages 664 - 675, XP033900607, DOI: 10.1109/TRUSTCOM50675.2020.00093
- WONG KOK-SENG WONG KS@VINUNI EDU VN ET AL: "A Privacy-Preserving Framework for Surveillance Systems", 2020 THE 10TH INTERNATIONAL CONFERENCE ON COMMUNICATION AND NETWORK SECURITY, ACMPUB27, NEW YORK, NY, USA, 27 November 2020 (2020-11-27), pages 91 - 98, XP058586019, ISBN: 978-1-4503-8809-2, DOI: 10.1145/3442520.3442524

## Description

### TECHNICAL FIELD

The present disclosure relates to the field of enabling training of a machine learning (ML) model, for monitoring a person and in particular to providing a data feed for training, where the level of anonymisation is dynamically selected.

### BACKGROUND

New technology opens up new opportunities. For instance, the evolution of digital cameras and communication technologies enable monitoring of people to be provided using video surveillance at relatively low cost. This can be particularly useful for elderly people or disabled people, who in this way can enjoy greatly improved quality of life by living in their own home instead of being in a staffed care facility. Video data can also be used e.g. for people counting.

Video surveillance is certainly useful, but privacy issues arise. Hardly anyone enjoys being continuously monitored using video surveillance, for monitoring of when the person needs help.

One way to reduce the privacy concern is to, instead of manual monitoring, use machine learning (ML) models to determine the state of a monitored person. However, also the video-data based ML models need to be trained, which requires video data to be provided to the ML models. Such video data for training sometimes needs to be manually processed as part of the training process, which is a privacy concern for the person captured in the video data.

US 2017/289504 A1 discloses privacy supporting computer vision systems, methods, apparatuses and associated computer executable code. US 2020/205697 A1 discloses a video-based fall risk assessment system. US 2019/042851 A1 discloses protection and recovery of identities in surveillance camera environments. Senavirathne Navoda et al: published for IEEE 19th International conference on trust, security and privacy in computing and communications (Trustcom), IEEE, pages 664-675, DOI: 10.1109/TRUSTCOM50675.2020.00093 an article entitled "On the Role of Data Anonymization in Machine Learning Privacy", discusses how data controllers may anonymize data before releasing them for any data analysis task such as machine learning. Wong Kok-Seng Wong Ks@Vinuni Edu Vn et al: published for THE 10th International conference on communication and network security, ACMPUB27, New York, NY, USA, 27 November 2020, pages 91-98 an article entitled "A Privacy-Preserving Framework for Surveillance Systems", is a paper proposing dynamic masking to ensure that an individual remains anonymous in a group.

### SUMMARY

One object is to provide an improved balance between privacy and training data requirements when providing training data based on a data feed capable of depicting people.

According to a first aspect, it is provided a method for enabling training of a machine learning, ML, model, for monitoring a person based on a data feed capable of depicting a person. The method is performed by a training data provider comprising a processor; and a memory storing instructions to be executed by the processor. The method comprises: obtaining a data feed capable of depicting the person; selecting a level of anonymisation, from a plurality of levels of anonymisation; anonymising the data feed according to the selected level of anonymisation, resulting in a processed data feed; transmitting the processed data feed as training data for training a central ML model in a central node; receiving an indication to increase or reduce the level of anonymisation from the central node. The method is repeated, wherein the next iteration of the selecting is based on the indication to increase or reduce the level of anonymisation.

The levels of anonymisation may include in, in order of increasing anonymisation: blurring of face, replacing face with a computer-generated face image, replacing face with a picture of someone else's face, blurring of entire body.

The anonymising may comprise selecting another face of the same gender as the person in the data feed.

The method may further comprise: determining a label associated with the data feed; and including the label in association with the processed data feed.

The label may indicate a near-fall event of the person.

The determining a label may be based on an inferred result by a local ML model, the local ML model being provided at the same site as the training data provider.

According to a second aspect, it is provided a training data provider for enabling training of a machine learning, ML, model, for monitoring a person based on a data feed capable of depicting a person. The training data provider comprises: a processor; and a memory storing instructions that, when executed by the processor, cause the training data provider to: obtain a data feed capable of depicting the person; select a level of anonymisation, from a plurality of levels of anonymisation; anonymise the data feed according to the selected level of anonymisation, resulting in a processed data feed; transmit the processed data feed as training data for training a central ML model in a central node; and receive an indication to increase or reduce the level of anonymisation from the central node; in which case said instructions are repeated, wherein the next iteration of the instructions to selecting is based on the indication to increase or reduce the level of anonymisation.

The levels of anonymisation may include in, in order of increasing anonymisation: blurring of face, replacing face with a computer-generated face image, replacing face with a picture of someone else's face, blurring of entire body.

The instructions to anonymise may comprise instructions that, when executed by the processor, cause the training data provider to select another face of the same gender as the person in the data feed.

The training data provider may further comprise instructions that, when executed by the processor, cause the training data provider to: determine a label associated with the data feed; and include the label in association with the processed data feed.

The label may indicate a near-fall event of the person.

The instructions to determine may comprise instructions that, when executed by the processor, cause the training data provider to determine the label is based on an inferred result by a local ML model, the local ML model being provided at the same site as the training data provider.

According to a third aspect, it is provided a computer program for enabling training of a machine learning, ML, model, for monitoring a person based on a data feed capable of depicting a person. The computer program comprises computer program code which, when executed on a training data provider causes the training data provider to: obtain a data feed capable of depicting the person; select a level of anonymisation, from a plurality levels of anonymisation; anonymise the data feed according to the selected level of anonymisation, resulting in a processed data feed; transmit the processed data feed as training data for training a central ML model in a central node; and receive an indication to increase or reduce the level of anonymisation from the central node; and repeat said computer program code, wherein the next iteration of the computer program code to select is based on the indication to increase or reduce the level of anonymisation.

According to a fourth aspect, it is provided a computer program product comprising a computer program according to the third aspect and a computer readable means on which the computer program is stored.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated.

### BRIEF DESCRIPTION OF THE DRAWINGS

Aspects and embodiments are now described, by way of example, with reference to the accompanying drawings, in which:
Fig 1 is a schematic diagram illustrating an environment in which embodiments presented herein can be applied;
Fig 2 is a flow chart illustrating embodiments of methods for enabling training of an ML model for monitoring a person based on a data feed capable of depicting a person;
Fig 3 is a schematic diagram illustrating components of the training data provider of Fig 1; and
Fig 4 shows one example of a computer program product comprising computer readable means.

### DETAILED DESCRIPTION

The aspects of the present disclosure will now be described more fully hereinafter with reference to the accompanying drawings, in which certain embodiments of the invention are shown. These aspects may, however, be embodied in many different forms and should not be construed as limiting; rather, these embodiments are provided by way of example so that this disclosure will be thorough and complete, and to fully convey the scope of all aspects of invention to those skilled in the art. Like numbers refer to like elements throughout the description.

Embodiments presented herein provide an improved way of anonymising a data feed for use as training data for an ML model. Specifically, one of a plurality levels of anonymisation is selected. In this way, the amount anonymisation can be tailored to the specific purpose, such that the anonymisation is not excessive to prevent training, while the anonymisation is as aggressive as possible to improve privacy of the person being depicted in the data feed.

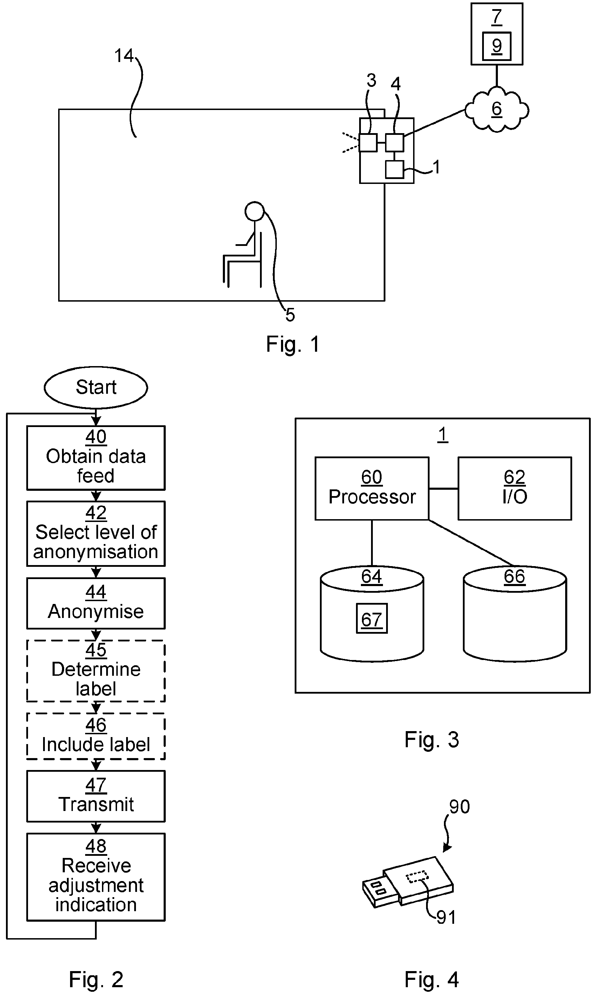

Fig 1 is a schematic diagram illustrating an environment in which embodiments presented herein can be applied. A person 5 to be monitored is at least part of the time present in a physical space 14. The physical space 14 can e.g. be a room, a flat, a house, an office etc. A monitoring device 2 is configured to monitor the person 5 based on a sensor device 3 forming part of the monitoring device 2 or locally connected to the monitoring device 2. The monitoring device 2 is also used for capturing data of the person 5 for purposes of training a local ML model 4 and a central ML model 9. The sensor device 3 provides a data feed capable of depicting the person 5, e.g. as a sequence of images (i.e. a video sequence). The sensor device 3 can be implemented as an infrared (IR) camera, a video camera, a lidar, a radar or any other suitable imaging technology. Additional sensor devices (not shown) can also be provided, providing respective data feeds. A training data provider 1 is used to provide training data for training the central ML model 9 as described in more detail below. The training data provider 1 can be provided as part of the monitoring device 2 or separately. In any case, the training data provider 1 is provided at the same site as the sensor device 3. In this way, sensitive data feeds from the sensor device 3 are anonymised by the training data provider 1 to prevent privacy-sensitive sections of the data feed having to be communicated remotely.

The monitoring device 2 comprises the local ML model 4. There may be one or more monitoring devices 2 working in parallel on the same or complementing scene. The monitoring device 2 can be connected to a network 6, which can be an Internet protocol (IP) based network. The network 6 can e.g. comprise any one or more of a local wireless network, a cellular network, a wired local area network, a wide area network (such as the Internet), etc. Optionally, a central node 7, containing the central ML model 9, is also connected to the network 6.

The local ML model 4 of the monitoring device 2 is used to predict current or future monitored states or events based on the data feed from the sensor device 3. Specifically, the local ML model 4 is used to infer a result of monitoring states or events of the person 5 that can be used as labels in the training data. Non-limiting examples of monitoring states or events, all relating to the person, are: absent, present, lying in bed, lying on floor, breathing, near-fall event, fall event, distress, etc.

Fig 2 is a flow chart illustrating embodiments of methods for enabling training of an ML model (e.g. the central ML model 9), for monitoring a person based on a data feed capable of depicting a person.

In an *obtain data feed* step 40, the training data provider 1 obtains a data feed capable of depicting the person. As explained above, the data feed can e.g. be based on data from one or more sensors such as infrared (IR) camera, a video camera, a lidar, a radar or any other suitable imaging technology. At this stage, the data feed has not been anonymised, and e.g. faces can potentially be seen in the data feed.

In a *select level of anonymisation* step 42, the training data provider 1 selects a level of anonymisation, from a plurality of levels of anonymisation. The levels of anonymisation can e.g. include in, in order of increasing anonymisation: blurring of face, replacing face with a computer-generated face image, replacing face with a picture of someone else's face, blurring of entire body.

In an anonymise step 44, the training data provider 1 anonymises the data feed according to the selected level of anonymisation, resulting in a processed data feed.

The anonymising can comprise, when a picture of someone else's face is used, selecting another face of the same gender as the person in the data feed. Alternatively or additionally, the face selection can be performed to achieve similar characteristics in terms as facial expression, which can be a valuable indicator to have in the training data. Alternatively or additionally, the face selection can be based on selecting another face of similar characteristics as the person in the data feed in terms of, hair colour, hair length, skin colour, etc.

Optionally, the original data feed (without anonymisation) is stored to allow training data with reduced anonymisation to be transmitted at a later stage if needed.

In an optional *determine label* step 45, the training data provider 1 determines a label associated with the data feed. For instance, the label can indicate something that occurs relatively rarely, such as a near-fall event of the person. This type of event can be anonymised in the training data and still be valuable, since the training can e.g. be based on the movement characteristics of the body of the person, and may be determined without great dependence on facial expressions. Since such events happen rarely, any way that makes it possible to provide large amounts of data, such as provided by embodiments presented herein, is greatly valuable.

The determining of the label can e.g. be based on an inferred result by a local ML model, where the local ML model is provided at the same site as the training data provider 1.

In an optional *include label* step 46, the training data provider 1 includes the label (from step 45) in association with the processed data feed.

In a *transmit processed data* step 47, the training data provider 1 transmits the processed (i.e. anonymised and optionally labelled) data feed, to be used as training data for training a central ML model in a central node.

In an optional, *receive adjustment indication* step 48, the training data provider 1 receives an indication to increase or reduce the level of anonymisation from the central node.

The method is then repeated, and when step 48 is performed, in the next iteration of step 42, the selecting is based on the indication to increase or reduce the level of anonymisation, i.e. implementing a feedback loop. In this way, the level of optimisation is dynamically adjusted in accordance with the need of the central node.

Using embodiments presented herein, the level of anonymisation can be adjusted to achieve a balance between the level of detail required in the training and the impact on privacy for the person depicted in the data feed. In other words, the amount of privacy sensitive data forming part of the training data is reduced compared to if the training data should be useable for all types of ML model training. On the other hand, the level of detail provided in the training data is improved in cases where this is needed for successful training.

For instance, people counting, detecting absence/presence of people, or detecting near-fall events do not need a great amount of privacy-sensitive data, such as face data.

Fig 3 is a schematic diagram illustrating components of the training data provider 1 of Fig 1. It is to be noted that, when the training data provider 1 is implemented in a host device such as the monitoring device 2, one or more of the mentioned components can be shared with the host device. A processor 60 is provided using any combination of one or more of a suitable central processing unit (CPU), multiprocessor, microcontroller, digital signal processor (DSP), etc., capable of executing software instructions 67 stored in a memory 64, which can thus be a computer program product. The processor 60 could alternatively be implemented using an application specific integrated circuit (ASIC), field programmable gate array (FPGA), etc. The processor 60 can be configured to execute the method described with reference to Fig 2 above.

The memory 64 can be any combination of random-access memory (RAM) and/or read-only memory (ROM). The memory 64 also comprises persistent storage, which, for example, can be any single one or combination of magnetic memory, optical memory, solid-state memory or even remotely mounted memory.

A data memory 66 is also provided for reading and/or storing data during execution of software instructions in the processor 60. The data memory 66 can be any combination of RAM and/or ROM.

The training data provider 1 further comprises an I/O interface 62 for communicating with external and/or internal entities. For instance, the I/O interface 62 allows the training data provider 1 to communicate the network 6. Optionally, the I/O interface 62 also includes a user interface.

Other components of the training data provider 1 are omitted in order not to obscure the concepts presented herein.

Fig 4 shows one example of a computer program product 90 comprising computer readable means. On this computer readable means, a computer program 91 can be stored, which computer program can cause a processor to execute a method according to embodiments described herein. In this example, the computer program product is in the form of a removable solid-state memory, e.g. a Universal Serial Bus (USB) drive. As explained above, the computer program product could also be embodied in a memory of a device, such as the computer program product 64 of Fig 3. While the computer program 91 is here schematically shown as a section of the removable solid-state memory, the computer program can be stored in any way which is suitable for the computer program product, such as another type of removable solid-state memory, or an optical disc, such as a CD (compact disc), a DVD (digital versatile disc) or a Blu-Ray disc.

The aspects of the present disclosure have mainly been described above with reference to a few embodiments. However, as is readily appreciated by a person skilled in the art, other embodiments than the ones disclosed above are equally possible within the scope of the invention, as defined by the appended patent claims. Thus, while various aspects and embodiments have been disclosed herein, other aspects and embodiments will be apparent to those skilled in the art. The various aspects and embodiments disclosed herein are for purposes of illustration and are not intended to be limiting, with the true scope being defined by the following claims.

## Claims

1. A method for enabling training of a machine learning, ML, model, for monitoring a person based on a data feed capable of depicting a person, the method being performed by a training data provider (1) comprising a processor (60); and a memory (64) storing instructions to be executed by the processor (60), the method comprising:
obtaining (40) a data feed capable of depicting the person;
selecting (42) a level of anonymisation, from a plurality of levels of anonymisation;
anonymising (44) the data feed according to the selected level of anonymisation, resulting in a processed data feed;
transmitting (47) the processed data feed as training data for training a central ML model in a central node; and
receiving (48) an indication to increase or reduce the level of anonymisation from the central node;
and wherein the method is repeated, wherein the next iteration of the selecting (42) is based on the indication to increase or reduce the level of anonymisation.

2. The method according to claim 1, wherein the levels of anonymisation include in, in order of increasing anonymisation: blurring of face, replacing face with a computer-generated face image, replacing face with a picture of someone else's face, blurring of entire body.

3. The method according to any one of the preceding claims, wherein the anonymising (44) comprises selecting another face of the same gender as the person in the data feed.

4. The method according to one of the preceding claims, further comprising:
determining (45) a label associated with the data feed, the label identifying a monitoring state or an event inferred by the ML model; and
including (46) the label in association with the processed data feed.

5. The method according to claim 4, wherein the label indicates a near-fall event of the person.

6. The method according to claim 4 or 5, wherein the determining (45) a label is based on an inferred result by a local ML model, the local ML model being provided at the same site as the training data provider (1).

7. A training data provider (1) for enabling training of a machine learning, ML, model, for monitoring a person based on a data feed capable of depicting a person, the training data provider (1) comprising:
a processor (60); and
a memory (64) storing instructions (67) that, when executed by the processor, cause the training data provider (1) to:
obtain a data feed capable of depicting the person;
select a level of anonymisation, from a plurality of levels of anonymisation;
anonymise the data feed according to the selected level of anonymisation, resulting in a processed data feed;
transmit the processed data feed as training data for training a central ML model in a central node: and
receive an indication to increase or reduce the level of anonymisation from the central node;
and repeat said instructions, wherein the next iteration of the instructions to select is based on the indication to increase or reduce the level of anonymisation.

8. The training data provider (1) according to claim 7, wherein the levels of anonymisation include in, in order of increasing anonymisation: blurring of face, replacing face with a computer-generated face image, replacing face with a picture of someone else's face, blurring of entire body.

9. The training data provider (1) according to any one of claims 7 to 8, wherein the instructions to anonymise comprise instructions (67) that, when executed by the processor, cause the training data provider (1) to select another face of the same gender as the person in the data feed.

10. The training data provider (1) according to one of claims 7 to 9, further comprising instructions (67) that, when executed by the processor, cause the training data provider (1) to:
determine a label associated with the data feed; and
include the label in association with the processed data feed.

11. The training data provider (1) according to claim 10, wherein the label indicates a near-fall event of the person.

12. The training data provider (1) according to claim 10 or 11, wherein the instructions to determine comprise instructions (67) that, when executed by the processor, cause the training data provider (1) to determine the label is based on an inferred result by a local ML model, the local ML model being provided at the same site as the training data provider (1).

13. A computer program (67, 91) for enabling training of a machine learning, ML, model, for monitoring a person based on a data feed capable of depicting a person, the computer program comprising computer program code which, when executed on a training data provider (1) causes the training data provider (1) to:
obtain a data feed capable of depicting the person;
select a level of anonymisation, from a plurality of levels of anonymisation;
anonymise the data feed according to the selected level of anonymisation, resulting in a processed data feed;
transmit the processed data feed as training data for training a central ML model in a central node; and
receive an indication to increase or reduce the level of anonymisation from the central node;
and repeat said computer program code, wherein the next iteration of the computer program code to select is based on the indication to increase or reduce the level of anonymisation.

14. A computer program product (64, 90) comprising a computer program according to claim 13 and a computer readable means on which the computer program is stored.

## Patentansprüche

1. Verfahren zum Ermöglichen eines Trainierens eines Modells für maschinelles Lernen, ML, zum Überwachen einer Person auf Basis eines Datenfeeds, welcher in der Lage ist, eine Person darzustellen, wobei das Verfahren von einem Trainingsdatenanbieter (1) ausgeführt wird, welcher einen Prozessor (60) und einen Speicher (64) umfasst, welcher Anweisungen speichert, welche von dem Prozessor (60) ausgeführt werden sollen, wobei das Verfahren umfasst:
Erhalten (40) eines Datenfeeds, welcher in der Lage ist, die Person darzustellen;
Auswählen (42) einer Anonymisierungsstufe aus einer Vielzahl von Anonymisierungsstufen;
Anonymisieren (44) des Datenfeeds gemäß der ausgewählten Anonymisierungsstufe, was zu einem verarbeiteten Datenfeed führt;
Übertragen (47) des verarbeiteten Datenfeeds als Trainingsdaten zum Trainieren eines zentralen ML-Modells in einem zentralen Knoten; und
Empfangen (48) eines Hinweises zum Erhöhen oder Verringern der Anonymisierungsstufe von dem zentralen Knoten;
und wobei das Verfahren wiederholt wird, wobei die nächste Iteration des Auswählens (42) auf dem Hinweis basiert, die Anonymisierungsstufe zu erhöhen oder zu verringern.

2. Verfahren nach Anspruch 1, wobei die Anonymisierungsstufen in der Reihenfolge zunehmender Anonymisierung beinhalten: Unschärfe eines Gesichts, Ersetzen eines Gesichts durch ein computergeneriertes Gesichtsbild, Ersetzen eines Gesichts durch ein Bild eines Gesichts einer anderen Person, Unschärfe eines gesamten Körpers.

3. Verfahren nach einem der vorstehenden Ansprüche, wobei das Anonymisieren (44) Auswählen eines anderen Gesichts des gleichen Geschlechts wie die Person im Datenfeed umfasst.

4. Verfahren nach einem der vorstehenden Ansprüche, weiter umfassend:
Bestimmen (45) einer mit dem Datenfeed verknüpften Bezeichnung, wobei die Bezeichnung einen Überwachungszustand oder ein von dem ML-Modell abgeleitetes Ereignis identifiziert; und
Einschließen (46) der Bezeichnung in Verknüpfung mit dem verarbeiteten Datenfeed.

5. Verfahren nach Anspruch 4, wobei die Bezeichnung auf ein Beinahe-Sturz-Ereignis der Person hinweist.

6. Verfahren nach Anspruch 4 oder 5, wobei das Bestimmen (45) einer Bezeichnung auf einem von einem lokalen ML-Modell abgeleiteten Ergebnis basiert, wobei das lokale ML-Modell am selben Standort wie der Trainingsdatenanbieter (1) bereitgestellt wird.

7. Trainingsdatenanbieter (1) zum Ermöglichen eines Trainierens eines Modells für maschinelles Lernen, ML, zum Überwachen einer Person auf Basis eines Datenfeeds, welcher in der Lage ist, eine Person darzustellen, wobei der Trainingsdatenanbieter (1) umfasst:
einen Prozessor (60); und
einen Speicher (64), welcher Anweisungen (67) speichert, welche, wenn sie von dem Prozessor ausgeführt werden, den Trainingsdatenanbieter (1) dazu veranlassen:
einen Datenfeed zu erhalten, welcher in der Lage ist, die Person darzustellen;
eine Anonymisierungsstufe aus einer Vielzahl von Anonymisierungsstufen auszuwählen;
den Datenfeed gemäß der ausgewählten Anonymisierungsstufe zu anonymisieren, was zu einem verarbeiteten Datenfeed führt;
den verarbeiteten Datenfeed als Trainingsdaten zum Trainieren eines zentralen ML-Modells in einem zentralen Knoten zu übertragen: und
einen Hinweis zum Erhöhen oder Verringern der Anonymisierungsstufe von dem zentralen Knoten zu empfangen;
und die Anweisungen zu wiederholen, wobei die nächste Iteration der Anweisungen zum Auswählen auf dem Hinweis basiert, die Anonymisierungsstufe zu erhöhen oder zu verringern.

8. Trainingsdatenanbieter (1) nach Anspruch 7, wobei die Anonymisierungsstufen in der Reihenfolge zunehmender Anonymisierung beinhalten: Unschärfe des Gesichts, Ersetzen des Gesichts durch ein computergeneriertes Gesichtsbild, Ersetzen des Gesichts durch ein Bild des Gesichts einer anderen Person, Unschärfe des gesamten Körpers.

9. Trainingsdatenanbieter (1) nach einem der Ansprüche 7 bis 8, wobei die Anweisungen zum Anonymisieren Anweisungen (67) umfassen, welche, wenn sie von dem Prozessor ausgeführt werden, den Trainingsdatenanbieter (1) dazu veranlassen, ein anderes Gesicht des gleichen Geschlechts wie die Person in dem Datenfeed auszuwählen.

10. Trainingsdatenanbieter (1) nach einem der Ansprüche 7 bis 9, weiter Anweisungen (67) umfassend, welche, wenn sie von dem Prozessor ausgeführt werden, den Trainingsdatenanbieter (1) dazu veranlassen:
eine Bezeichnung zu bestimmen, welche mit dem Datenfeed verknüpft ist; und
die Bezeichnung im Verknüpfung mit dem verarbeiteten Datenfeed einzuschließen.

11. Trainingsdatenanbieter (i) nach Anspruch 10, wobei die Bezeichnung auf ein Beinahe-Sturz-Ereignis der Person hinweist.

12. Trainingsdatenanbieter (1) nach Anspruch 10 oder 11, wobei die Anweisungen zum Bestimmen Anweisungen (67) umfassen, welche, wenn sie von dem Prozessor ausgeführt werden, den Trainingsdatenanbieter (1) veranlassen, zu bestimmen, dass die Bezeichnung auf einem von einem lokalen ML-Modell abgeleiteten Ergebnis basiert, wobei das lokale ML-Modell am selben Standort wie der Trainingsdatenanbieter (1) bereitgestellt wird.

13. Computerprogramm (67, 91) zum Ermöglichen eines Trainierens eines Modells für maschinelles Lernen, ML, zum Überwachen einer Person auf Basis eines Datenfeeds, welcher in der Lage ist, eine Person darzustellen, wobei das Computerprogramm Computerprogrammcode umfasst, welcher, wenn er auf einem Trainingsdatenanbieter (1) ausgeführt wird, den Trainingsdatenanbieter (1) dazu veranlasst,
einen Datenfeed zu erhalten, welcher in der Lage ist, die Person darzustellen;
eine Anonymisierungsstufe aus einer Vielzahl von Anonymisierungsstufen auszuwählen;
den Datenfeed gemäß der ausgewählten Anonymisierungsstufe zu anonymisieren, was zu einem verarbeiteten Datenfeed führt;
den verarbeiteten Datenfeed als Trainingsdaten zum Trainieren eines zentralen ML-Modells in einem zentralen Knoten zu übertragen; und
einen Hinweis zum Erhöhen oder Verringern der Anonymisierungsstufe von dem zentralen Knoten zu empfangen;
und den Computerprogrammcode zu wiederholen, wobei die nächste Iteration des Computerprogrammcodes zum Auswählen auf dem Hinweis basiert, die Anonymisierungsstufe zu erhöhen oder zu verringern.

14. Computerprogrammprodukt (64, 90), das ein Computerprogramm nach Anspruch 13 und ein computerlesbares Mittel umfasst, auf dem das Computerprogramm gespeichert ist.

## Revendications

1. Procédé pour permettre l'entraînement d'un modèle d'apprentissage automatique (ML) pour surveiller une personne sur la base d'un flux de données qui permet de représenter une personne, le procédé étant réalisé par un fournisseur de données d'entraînement (1) comprenant un processeur (60); et une mémoire (64) stockant des instructions qui doivent être exécutées par le processeur (60), le procédé comprenant :
l'obtention (40) d'un flux de données qui permet de représenter la personne ;
la sélection (42) d'un niveau d'anonymisation, parmi une pluralité de niveaux d'anonymisation ;
l'anonymisation (44) du flux de données selon le niveau d'anonymisation sélectionné, ce qui a pour résultat un flux de données traité ;
la transmission (47) du flux de données traité en tant que données d'entraînement pour entraîner un modèle ML central dans un nœud central ; et
la réception (48) d'une indication d'augmentation ou de réduction du niveau d'anonymisation en provenance du nœud central ;
et dans lequel le procédé est répété, dans lequel la prochaine itération de la sélection (42) est basée sur l'indication d'augmentation ou de réduction du niveau d'anonymisation.

2. Procédé selon la revendication 1, dans lequel les niveaux d'anonymisation incluent, par ordre croissant d'anonymisation : le floutage du visage, le remplacement du visage par une image de visage générée par ordinateur, le remplacement du visage par une image du visage de quelqu'un d'autre, le floutage du corps entier.

3. Procédé selon l'une quelconque des revendications précédentes, dans lequel l'anonymisation (44) comprend la sélection d'un autre visage du même sexe que celui de la personne dans le flux de données.

4. Procédé selon l'une quelconque des revendications précédentes, comprenant en outre :
la détermination (45) d'une étiquette associée au flux de données, l'étiquette identifiant un état de surveillance ou un événement déduit par le modèle ML ; et
l'inclusion (46) de l'étiquette en association avec le flux de données traité.

5. Procédé selon la revendication 4, dans lequel l'étiquette indique un événement de chute imminente de la personne.

6. Procédé selon la revendication 4 ou 5, dans lequel la détermination (45) d'une étiquette est basée sur un résultat déduit par un modèle ML local, le modèle ML local étant fourni sur le même site que celui du fournisseur de données d'entraînement (1).

7. Fournisseur de données d'entraînement (1) pour permettre l'entraînement d'un modèle d'apprentissage automatique, ML, pour surveiller une personne sur la base d'un flux de données qui permet de représenter une personne, le fournisseur de données d'entraînement (1) comprenant :
un processeur (60) ; et
une mémoire (64) stockant des instructions (67) qui, lorsqu'elles sont exécutées par le processeur, amènent le fournisseur de données d'entraînement (1) à :
obtenir un flux de données qui permet de représenter la personne ;
sélectionner un niveau d'anonymisation, parmi une pluralité de niveaux d'anonymisation ;
anonymiser le flux de données selon le niveau d'anonymisation sélectionné, ce qui a pour résultat un flux de données traité ;
transmettre le flux de données traité en tant que données d'entraînement pour entraîner un modèle ML central dans un nœud central ; et
recevoir une indication d'augmentation ou de réduction du niveau d'anonymisation en provenance du nœud central ;
et répéter lesdites instructions, dans lequel la prochaine itération des instructions pour sélectionner est basée sur l'indication d'augmentation ou de réduction du niveau d'anonymisation.

8. Fournisseur de données d'entraînement (1) selon la revendication 7, dans lequel les niveaux d'anonymisation incluent, par ordre croissant d'anonymisation : le floutage du visage, le remplacement du visage par une image de visage générée par ordinateur, le remplacement du visage par une image du visage de quelqu'un d'autre, le floutage du corps entier.

9. Fournisseur de données d'entraînement (1) selon l'une quelconque des revendications 7 à 8, dans lequel les instructions pour anonymiser comprennent des instructions (67) qui, lorsqu'elles sont exécutées par le processeur, amènent le fournisseur de données d'entraînement (1) à sélectionner un autre visage du même sexe que celui de la personne dans le flux de données.

10. Fournisseur de données d'entraînement (1) selon l'une des revendications 7 à 9, comprenant en outre des instructions (67) qui, lorsqu'elles sont exécutées par le processeur, amènent le fournisseur de données d'entraînement (1) à :
déterminer une étiquette associée au flux de données ; et
inclure l'étiquette en association avec le flux de données traité.

11. Fournisseur de données d'entraînement (i) selon la revendication 10, dans lequel l'étiquette indique un événement de chute imminente de la personne.

12. Fournisseur de données d'entraînement (1) selon la revendication 10 ou 11, dans lequel les instructions de détermination comprennent des instructions (67) qui, lorsqu'elles sont exécutées par le processeur, amènent le fournisseur de données d'entraînement (1) à déterminer que l'étiquette est basée sur un résultat déduit par un modèle ML local, le modèle ML local étant fourni sur le même site que celui du fournisseur de données d'entraînement (1).

13. Programme informatique (67, 91) pour permettre l'entraînement d'un modèle d'apprentissage automatique, ML, pour surveiller une personne sur la base d'un flux de données qui permet de représenter une personne, le programme informatique comprenant un code de programme informatique qui, lorsqu'il est exécuté sur un fournisseur de données d'entraînement (1), amène le fournisseur de données d'entraînement (1) à :
obtenir un flux de données qui permet de représenter la personne ;
sélectionner un niveau d'anonymisation, parmi une pluralité de niveaux d'anonymisation ;
anonymiser le flux de données en fonction du niveau d'anonymisation sélectionné, ce qui a pour résultat un flux de données traité ;
transmettre le flux de données traité en tant que données d'entraînement pour entraîner un modèle ML central dans un nœud central ; et
recevoir une indication d'augmentation ou de réduction du niveau d'anonymisation en provenance du nœud central ;
et répéter ledit code de programme informatique, dans lequel la prochaine itération du code de programme informatique pour sélectionner est basée sur l'indication d'augmentation ou de réduction du niveau d'anonymisation.

14. Produit programme informatique (64, 90) comprenant un programme informatique selon la revendication 13 et un moyen lisible par ordinateur sur lequel le programme informatique est stocké.
